# EUROPEAN PATENT APPLICATION

(11) **EP 3 181 942 A1**
(43) Date of publication of application: **21.06.2017**
(21) Application number: 16202988.8
(22) Date of filing: 08.12.2016
(51) Int. Cl.: F16F 9/05, F16F 9/04

(54) **AIR SPRING**

(30) Priority: 17.12.2015 JP 2015246364
(71) Applicant: AISIN SEIKI KABUSHIKI KAISHA, Kariya-shi Aichi-ken 448-8650 (JP)
(72) Inventor: AKIYAMA, Yukihiro, Kariya-shi, Aichi-ken,, 448-8650 (JP)
(74) Representative: Winter, Brandl, Fürniss, Hübner, Röss, Kaiser, Polte - Partnerschaft mbB

(57) **Abstract**

An air spring includes: a first housing (10) having a first annular supporting unit (10a) opening upward; a second housing (20) disposed at a predetermined distance above the first housing and having a second annular supporting unit (20a) opening downward; and a diaphragm (30) configured of an elastic tubular member forming an air chamber (50) by upper and lower opening end portions of the elastic tubular member being air-tightly bonded to the first and second annular supporting units respectively, wherein at least one of the first and second housings has a main body unit (10b, 20b) made of a synthetic resin, at least one of the first and second annular supporting units is a metallic annular member integrated with the main body unit made of the synthetic resin, and one of the opening end portions of the diaphragm is air-tightly bonded to an outer peripheral surface of the annular member.

## Description

### TECHNICAL FIELD

The disclosure relates to an air spring, in particular, to an air spring provided in a vehicle suspension.

### BACKGROUND DISCUSSION

An air spring has already been used in automobiles and railway vehicles, and in general, air is enclosed in bellows or a container of a diaphragm. Air springs having a variety of structures, including an air spring that controls the introduction of external air and the exhaust of the air, are known. For instance, in Japanese Patent No. 4845532 (Reference 1) described below, disclosed (described in paragraphs [0007] and [0008] of Reference 1) is an air spring whose object is "to provide an air spring that can be configured easily at an affordable cost without being air-tightly bonded by welding", and which "includes: a first bottomed tube that has a bottom at an upper part thereof and opens downward; a second bottomed tube that is disposed at a predetermined distance below the first bottomed tube, has a bottom at an upper part thereof, and opens downward; and a diaphragm that has a tubular body which slidably accommodates an opening end side of the second bottomed tube, that is formed by a part of an opening end of the second bottomed tube being fixed to and being integrated with an inner peripheral surface of the tubular body at a predetermined position in an axial direction with respect to the tubular body, and that is an elastic tubular member in which a lower opening end portion is air-tightly bonded to an outer peripheral surface of the second bottomed tube and an upper opening end portion is air-tightly bonded to an outer peripheral surface of the first bottomed tube, in which an air chamber is formed between the bottom of the first bottomed tube and the bottom of the second bottomed tube within the diaphragm".

It is preferable to have a housing made of a synthetic resin in order to meet a recent call for a lighter housing since, in the air spring described in Reference 1, both housings formed of the first and second bottomed tubes are made of a metal. However, as described in the aforementioned Reference 1, although it is easy to fasten the diaphragm to the opening end portion of the metallic housing by a fastening member, it is difficult to secure enough rigidity for the housing made of the synthetic resin to resist a fastening force generated by the fastening member, and since the housing made of the synthetic resin requires a separate and special bonding structure, costs rise.

### SUMMARY

Thus, a need exists for an air spring that allows reducing the weight of a housing and air-tightly bonding a diaphragm with respect to the housing without difficulty in a reliable manner.

An air spring according to an aspect of this disclosure is configured to include a first housing that has a first annular supporting unit which opens upward, a second housing that is disposed at a predetermined distance above the first housing and has a second annular supporting unit which opens downward, and a diaphragm which is configured of an elastic tubular member and the elastic tubular member of which forms an air chamber by upper and lower opening end portions of the elastic tubular member being air-tightly bonded to the first annular supporting unit and the second annular supporting unit respectively, in which at least one of the first housing and the second housing has a main body unit made of a synthetic resin, at least one of the first annular supporting unit and the second annular supporting unit is a metallic annular member integrated with the main body unit made of the synthetic resin, and one of the opening end portions of the diaphragm is air-tightly bonded to an outer peripheral surface of the annular member. In the present application, the terms upward and downward define a mutual relationship between configuration elements, which means the terms define a relative relationship between the configuration elements based on a general disposition at a time when the air spring is mounted in a vehicle. The terms are not necessarily limited to an upward and downward disposition.

It is preferable that the air spring has a configuration in which the annular member has an axial-direction end portion that is bendable outward and is caulk-coupled such that the axial-direction end portion encompasses one opening end portion of the diaphragm, and thus the annular member and the diaphragm are air-tightly bonded.

In addition, it is preferable that the air spring has a configuration in which the annular member is a metallic annular member that has rigidity, and an inner peripheral surface of one opening end portion of the diaphragm is in close contact with and is air-tightly bonded to the outer peripheral surface of the annular member. It is preferable that the air spring further includes a fastening member that is provided on an outer peripheral surface of the one opening end portion of the diaphragm and is fastened to the annular member such that the opening end portion is sandwiched.

In addition, it is preferable that the air spring has a configuration in which the air spring further includes a metallic second annular member whose inner peripheral surface is in close contact with and is caulk-coupled to the outer peripheral surface of the annular member, and may have a configuration in which the inner peripheral surface of the one opening end portion of the diaphragm is in close contact with and is air-tightly bonded to an outer peripheral surface of the second annular member. It is preferable that the air spring further includes a fastening member that is provided on an outer peripheral surface of the one opening end portion of the diaphragm and is fastened to the second annular member such that the opening end portion is sandwiched. Alternatively, it is preferable that the air spring further includes a second fastening member that is provided on an outer peripheral surface of the one opening end portion of the diaphragm and is fastened, by a bolt, to the second annular member such that the opening end portion is sandwiched.

Since the disclosure is configured as described above, effects thereof will be explained in the followings. That is, a lighter housing can be made and a diaphragm can be air-tightly bonded even to a housing made of a synthetic resin without difficulty in a reliable manner since the disclosure includes a first housing that has a first annular supporting unit which opens upward, a second housing that is disposed at a predetermined distance above the first housing and has a second annular supporting unit which opens downward, and a diaphragm which is configured of an elastic tubular member and the elastic tubular member of which forms an air chamber by upper and lower opening end portions of the elastic tubular member being air-tightly bonded to the first annular supporting unit and the second annular supporting unit respectively, in which at least one of the first housing and the second housing has a main body unit made of a synthetic resin, at least one of the first annular supporting unit and the second annular supporting unit is a metallic annular member that is integrated with the main body unit made of the synthetic resin, and one of the opening end portions of the diaphragm is air-tightly bonded to an outer peripheral surface of the annular member.

If the air spring has a configuration in which the above annular member has an axial-direction end portion that is bendable outward and is caulk-coupled such that the axial-direction end portion encompasses one opening end portion of the diaphragm, and thus the annular member and the diaphragm are air-tightly bonded, the diaphragm can be easily bonded by the annular member itself without a separate fastening member being provided and an air spring with a small number of components can be provided at an affordable price.

In addition, if the air spring has a configuration in which the annular member is a metallic annular member that has rigidity, and an inner peripheral surface of the one opening end portion of the diaphragm is in close contact with and is air-tightly bonded to the outer peripheral surface of the annular member, the diaphragm can be air-tightly bonded even to a housing made of a synthetic resin without difficulty in a reliable manner. If the air spring further includes a fastening member that is provided on an outer peripheral surface of the one opening end portion of the diaphragm and is fastened to the annular member such that the opening end portion is sandwiched, a bonding structure similar to the related art can be employed even to a housing made of a synthetic resin.

In addition, if the air spring further includes a metallic second annular member whose inner peripheral surface is in close contact with and is caulk-coupled to the outer peripheral surface of the annular member, and has a configuration in which an inner peripheral surface of the one opening end portion of the diaphragm is in close contact with and is air-tightly bonded to an outer peripheral surface of the second annular member, the annular member can be made small and can be formed easily so as to be integrated with the main body unit made of the synthetic resin. If the air spring further includes a fastening member that is provided on an outer peripheral surface of the one opening end portion of the diaphragm and is fastened to the second annular member such that the opening end portion is sandwiched, the second annular member can be caulk-coupled to the above annular member in a state where the diaphragm has been bonded, by the fastening member, to the second annular member in advance. Alternatively, even when the air spring further includes a second fastening member that is provided on an outer peripheral surface of the one opening end portion of the diaphragm and is fastened, by a bolt, to the second annular member such that the opening end portion is sandwiched, the second annular member can be caulk-coupled to the above annular member in a state where the diaphragm has been bonded, by the second fastening member, to the second annular member in advance.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a sectional view illustrating an air spring according to an embodiment disclosed here;
Fig. 2 is an enlarged sectional view illustrating a second housing in another form according to the embodiment disclosed here;
Fig. 3 is an enlarged sectional view illustrating a part of a first housing portion according to the embodiment disclosed here;
Fig. 4 is an enlarged sectional view illustrating a part of a first housing portion according to another embodiment disclosed here;
Fig. 5 is an enlarged sectional view illustrating a part of a first housing portion according to still another embodiment disclosed here; and
Fig. 6 is an enlarged sectional view illustrating a part of a first housing portion according to the other embodiment disclosed here.

### DETAILED DESCRIPTION

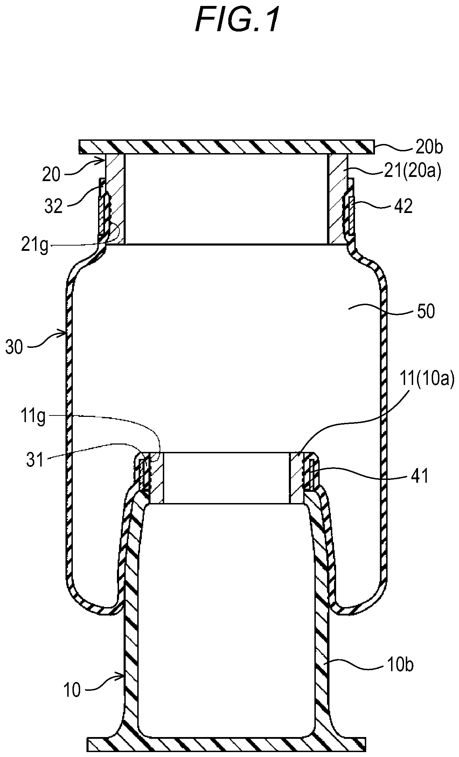

Hereinafter, preferable embodiments disclosed here will be described with reference to the drawings. Fig. 1 illustrates an air spring according to one embodiment disclosed here, and the air spring is provided in an automobile suspension. As illustrated in Fig. 1, a first housing 10 that has a first annular supporting unit 10a which opens upward and a second housing 20 that has a second annular supporting unit 20a which opens downward are disposed at a predetermined distance away from each other. Upper and lower opening end portions of a diaphragm 30, which is a tubular elastomeric member, are air-tightly bonded to the first annular supporting unit 10a and the second annular supporting unit 20a respectively. The first and second housings 10 and 20 and the diaphragm 30 form an air chamber 50 that can become an enclosed space. In addition, although not illustrated, the air spring is configured such that an intake and exhaust port through which air is taken into and exhausted from the air chamber 50 is mounted in the first housing 10 and a dust cover which covers the entire air spring is mounted.

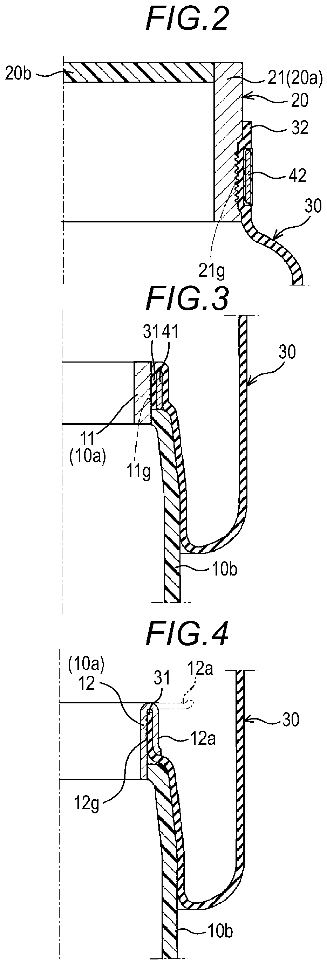

In the embodiment, the first and second housings 10 and 20 have a bottomed tubular main body unit 10b and a disk-shaped main body unit 20b respectively which are made of a synthetic resin. The first and second annular supporting units 10a and 20a are configured of metallic annular members (hereinafter, indicated by 11 and 21) that are formed in and are integrated with the main body units 10b and 20b respectively by insert molding. Opening end portions 31 and 32 of the diaphragm 30 are air-tightly bonded to outer peripheral surfaces of the annular members 11 and 21. In the second housing 20, although the annular member 21 is insert-molded so as to extend downward from a plate-like surface of the disk-shaped main body unit 20b as illustrated in Fig. 1, an inner peripheral surface of the annular member 21 may be insert-molded so as to be bonded to the outer peripheral surface of the main body unit 20b as illustrated in Fig. 2. A plurality of annular grooves (representatively indicated by groove portions 11g and 21 g respectively) are formed in the outer peripheral surfaces of the annular members 11 and 21.

As illustrated in Fig. 1, both of the annular members 11 and 21 in the embodiment are short metallic cylinders that have rigidity, and both of the annular members 11 and 21 are formed in shapes similar to each other. However, the annular members 11 and 21 do not necessarily have to be formed in similar shapes. In addition, fastening members 41 and 42 are mounted on outer peripheral surfaces of the opening end portions 31 and 32 of the diaphragm 30, and are fastened to the annular members 11 and 21 such that the opening end portions 31 and 32 are sandwiched therebetween. Therefore, inner peripheral surfaces of the opening end portions 31 and 32 of the diaphragm 30 are in close contact with and are air-tightly bonded to the outer peripheral surfaces of the annular members 11 and 21. Fastening belts made of a metal or a synthetic resin may be used as the fastening members 41 and 42 but a metallic fastening belt coated with a resin may be used as the fastening member 42 illustrated in Fig. 2.

In the first and second housings 10 and 20 that have the aforementioned configuration, as illustrated in Fig. 1, the diaphragm 30 is bonded to the annular members 11 and 21 and is fastened by the fastening members 41 and 42 such that the inner peripheral surfaces of the opening end portions 31 and 32 of the diaphragm 30 are in close contact with the outer peripheral surfaces of the annular members 11 and 21 which include the groove portions 11 g and 21 g. For instance, in a case of the first housing 10, as illustrated in Fig. 1 and Fig. 3 (a lower part of Fig. 1 is enlarged), a tip of the opening end portion 31 at the lower part of diaphragm 30 is inserted from an upper side of the annular member 11 until the tip reaches an upper end surface of the main body unit 10b beyond the groove portion 11g, is fastened by the fastening member 41, and then is folded back so as to be brought into a state illustrated in Fig. 3. The fastening member 42 fastens similarly even in a case of the second housing 20. Accordingly, the opening end portions 31 and 32 of the diaphragm 30 are air-tightly bonded to the first and second annular supporting units 10a and 20a (annular members 11 and 21) of the first and second housings 10 and 20.

Since Fig. 4 illustrates an air spring according to another embodiment disclosed here, the first housing 10 in the embodiment is configured of a metallic annular member 12 that has an axial-direction end portion 12a which is bendable to the outside of the first annular supporting unit 10a. Similar to the groove portion 11 g, a plurality of annular grooves are formed (representatively indicated by a groove portion 12g) in an outer peripheral surface of the annular member 12. In addition, the annular member 12 is caulk-coupled such that the axial-direction end portion 12a encompasses the opening end portion 31 of the diaphragm 30, and thereby the annular member 12 and the diaphragm 30 are air-tightly bonded. In Fig. 4, elements that are practically the same as the configuration elements described in Fig. 3 will be given with the same reference numerals in Fig. 3, and description thereof will not be repeated (the same applies hereafter).

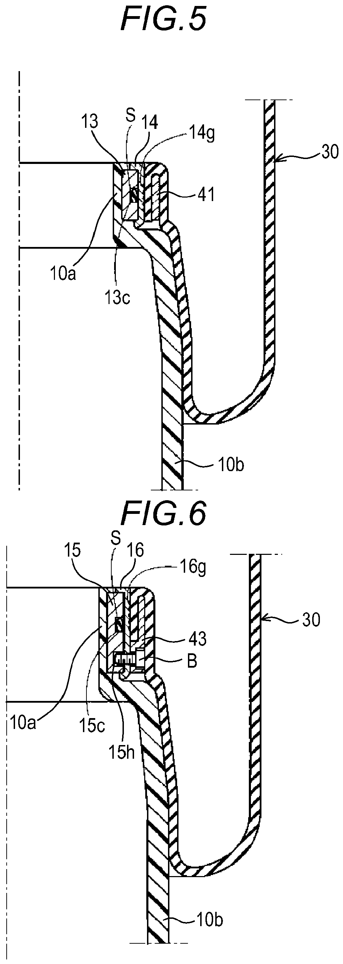

Fig. 5 illustrates an air spring according to still another embodiment disclosed here. In the first housing 10 of the embodiment, an inner peripheral surface of the metallic second annular member 14 is in close contact with and is caulk-coupled to an outer peripheral surface of an annular member 13 that configures the first annular supporting unit 10a, and a plurality of annular grooves are formed (representatively indicated by a groove portion 14g) in an outer peripheral surface of the second annular member 14. In addition, the inner peripheral surface of the opening end portion 31 of the diaphragm 30 is in close contact with and is air-tightly bonded to the outer peripheral surface of the second annular member 14. The annular member 13 is made smaller than the annular member 11, and is insert-molded such that a synthetic resin covers an inner peripheral surface of the annular member 13. In addition, an annular groove 13c is formed in the outer peripheral surface of the annular member 13, and a sealant S is engaged with the annular groove 13c.

On the other hand, both ends of the second annular member 14 in an axial direction are bent toward an annular member 13 side, and thus the second annular member 14 is configured so as to be caulk-coupled to the annular member 13. For instance, in a state where one end of the second annular member 14 in the axial direction (the upside of Fig. 5), that is, a part of the second annular member 14 which has been formed so as to be bent inward is disposed on the outside of the annular member 13, the other end in the axial direction (the downside of Fig. 5) is bent toward the annular member 13 side and is caulk-coupled to the annular member 13.

Therefore, according to the embodiment illustrated in Fig. 5, since the first annular supporting unit 10a is formed such that the inner peripheral surface of the annular member 13 is insert-molded so as to be covered with the synthetic resin, a width and rigidity required for fastening by the fastening member 41 can be secured even in a case where the width of the annular member 13 (a dimension in an up-and-down direction of Fig. 5) is smaller than the width of the annular member 11 in the aforementioned embodiment. Thus, the second annular member 14 can be caulk-coupled to the annular member 13 in a state where the diaphragm 30 has been fastened (bonded) to the second annular member 14 by the fastening member 41 in advance.

Fig. 6 illustrates an air spring according to the other embodiment disclosed here. In the first housing 10 of the embodiment, an inner peripheral surface of a metallic second annular member 16 is in close contact with and is caulk-coupled to an outer peripheral surface of an annular member 15 that configures the first annular supporting unit 10a, and a plurality of annular grooves are formed (representatively indicated by a groove portion 16g) in an outer peripheral surface of the second annular member 16. Similar to the annular member 13, the annular member 15 illustrated in Fig. 6 is insert-molded such that an inner peripheral surface of the annular member 15 is covered with a synthetic resin. In addition, an annular groove 15c that is engaged with the sealant S is formed in the outer peripheral surface of the annular member 15. A recess portion 15h is formed in the outer peripheral surface of the annular member 15 as well.

Similar to the second annular member 14, the second annular member 16 is configured such that both ends of the second annular member 16 in the axial direction are bent toward an annular member 15 side and the second annular member 16 is caulk-coupled to the annular member 15. In addition, a female screw hole (related description omitted) is formed at a position corresponding to the recess portion 15h in the second annular member 16. Accordingly, unlike the fastening members 41 and 42, a second fastening member 43 is configured so as to have a recess portion (related description omitted) that accommodates the head of a bolt B, and the second fastening member 43 is coupled to the second annular member 16 by a male screw portion of the bolt B being screwed with the female screw hole (related description omitted) of the second annular member 16. As a result, the second annular member 16 can be caulk-coupled to the annular member 15 in a state where the diaphragm 30 has been bonded to the second annular member 16 by the second fastening member 43 and the bolt B in advance. At this time, a tip portion of the bolt B is accommodated in the recess portion 15h of the annular member 15.

As described above, in the air spring of each of the aforementioned embodiments, the diaphragm 30 is reliably and air-tightly bonded by the annular members 11 and 12 or by the annular members 13 and 15 and the second annular members 14 and 16, and by the fastening members 41 and 42 or by the second fastening member 43 even in a case where at least one of the first and second housings 10 and 20 is formed with the synthetic resin. Therefore, a lighter air spring can be manufactured at an affordable cost compared to the related device. In addition, the opening end portions 31 and 32 of the diaphragm 30 are reliably held by the fastening members 41 and 42 or by the second fastening member 43, and thereby the falling of the diaphragm 30 can be prevented. Although a bonding structure of the diaphragm 30 with respect to the first housing 10 is illustrated from Fig. 3 to Fig. 6, a similar bonding structure can be employed with respect to the second housing 20. In addition, both of the first and second housings 10 and 20 may have the same bonding structure or may have bonding structures different from each other. In addition, the aforementioned air spring can also be applied to an air suspension strut by the air spring being mounted in a shock absorber (not illustrated).

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

## Claims

1. An air spring comprising:
a first housing (10) that has a first annular supporting unit (10a) which opens upward;
a second housing (20) that is disposed at a predetermined distance above the first housing and has a second annular supporting unit (20a) which opens downward; and
a diaphragm (30) which is configured of an elastic tubular member and the elastic tubular member of which forms an air chamber (50) by upper and lower opening end portions of the elastic tubular member being air-tightly bonded to the first annular supporting unit and the second annular supporting unit respectively,
wherein at least one of the first housing and the second housing has a main body unit (10b, 20b) made of a synthetic resin, at least one of the first annular supporting unit and the second annular supporting unit is a metallic annular member integrated with the main body unit made of the synthetic resin, and one of the opening end portions of the diaphragm is air-tightly bonded to an outer peripheral surface of the annular member.

2. The air spring according to claim 1,
wherein the annular member has an axial-direction end portion (12a) that is bendable outward, and is caulk-coupled such that the axial-direction end portion encompasses one opening end portion of the diaphragm, and thus the annular member and the diaphragm are air-tightly bonded.

3. The air spring according to claim 1,
wherein the annular member is a metallic annular member (11, 12) that has rigidity, and an inner peripheral surface of the one opening end portion of the diaphragm is in close contact with and is air-tightly bonded to the outer peripheral surface of the annular member.

4. The air spring according to claim 3, further comprising:
a fastening member (41, 42) that is provided on an outer peripheral surface of the one opening end portion of the diaphragm and is fastened to the annular member such that the opening end portion is sandwiched.

5. The air spring according to claim 3, further comprising:
a metallic second annular member (14) whose inner peripheral surface is in close contact with and is caulk-coupled to the outer peripheral surface of the annular member,
wherein the inner peripheral surface of the one opening end portion of the diaphragm is in close contact with and is air-tightly bonded to an outer peripheral surface of the second annular member.

6. The air spring according to claim 5, further comprising:
a fastening member (41, 42) that is provided on an outer peripheral surface of the one opening end portion of the diaphragm and is fastened to the second annular member such that the opening end portion is sandwiched.

7. The air spring according to claim 5, further comprising:
a second fastening member (43) that is provided on an outer peripheral surface of the one opening end portion of the diaphragm and is fastened, by a bolt, to the second annular member such that the opening end portion is sandwiched.
